# DEMANDE DE BREVET EUROPEEN

(11) **EP 0 952 051 A1**
(43) Date de publication de la demande: **27.10.1999**
(21) Numéro de dépôt: 99400935.5
(22) Date de dépôt: 16.04.1999
(51) Int. Cl.: B60R 25/02

(54) **Antivol de colonne de direction comportant une épingle élastique de blocage du pêne**

(30) Priorité: 21.04.1998 FR 9805135
(71) Demandeur: ANTIVOLS SIMPLEX, 21059 Dijon Cédex (FR)
(72) Inventeur: Touratier, Thierry, 95160 Montmorency (FR)
(74) Mandataire: Kohn, Philippe

(57) **Abrégé**

L'invention propose un antivol de colonne de direction comportant une première partie (18) renfermant un pêne (16), une seconde partie (32) renfermant un élément de commande du pêne, et des moyens pour bloquer le pêne (16) lorsque les deux parties (18, 32) sont séparées l'une de l'autre, caractérisé en ce que les moyens pour bloquer le pêne (16) sont constitués par une épingle élastique (42) à deux branches qui, tant que les deux parties (18, 32) ne sont pas séparées, est maintenue par la deuxième partie (78) dans un état contraint, et en ce que, lorsque les deux parties (18, 32) sont séparées, l'épingle (42) revient vers un état de moindre contrainte, dans lequel l'une des branches (48) coopère avec le pêne (16) pour en assurer le blocage.

## Description

L'invention concerne un antivol de colonne de direction comportant une épingle élastique de blocage du pêne.

L'invention se rapporte plus particulièrement à un antivol de colonne de direction, du type comportant une première partie renfermant un pêne qui, dans une position antivol, est destiné à immobiliser en rotation une colonne de direction, et seconde partie renfermant un élément de commande du pêne qui commande le pêne entre sa position antivol et une position dégagée, et du type dans lequel il est prévu des moyens pour bloquer le pêne lorsque les deux parties de l'antivol sont séparées l'une de l'autre.

Un tel dispositif est par exemple décrit dans le document FR-A-2.679.504.

Le but d'un tel dispositif est notamment de renforcer la résistance de l'antivol à toute tentative d'effraction. Il s'agit d'éviter que l'on puisse désactiver l'antivol trop facilement, notamment en forçant les moyens de commande de celui-ci. En effet, l'antivol comporte, en plus du pêne, des moyens de commande de ce pêne qui ont généralement pour rôle d'assurer la reconnaissance de l'utilisateur qui veut conduire le véhicule. Un tel dispositif de reconnaissance est par exemple réalisé sous la forme d'un verrou rotatif qui, en principe, ne peut être actionné qu'à l'aide d'une clé conforme spécifique.

Cependant, il est connu que l'on puisse forcer un tel verrou en appliquant sur celui-ci des efforts modérément importants.

Aussi, il a déjà été prévu de pouvoir séparer l'antivol en deux parties, l'une comportant le pêne d'immobilisation de la colonne et l'autre comportant les moyens de commande du pêne, de telle manière que, en tentant de forcer le verrou rotatif, on provoque obligatoirement une rupture de l'antivol selon une ligne de rupture programmée, cette rupture déclenchant la mise en oeuvre des moyens de blocage de la colonne de direction.

Le dispositif décrit dans le brevet FR-A-2.679.504 décrit des moyens de blocage du pêne qui font appel à un doigt de blocage, à un élément élastique et à un pion de retenue du doigt de blocage dans une position escamotée.

Comme on peut le voir dans ce document, le doigt de blocage et le pion de retenue coulissent chacun dans un logement spécifique, ces deux logements étant aménagés selon des directions perpendiculaires. Outre les difficultés de réalisation de ces logements aux orientations différentes, cette conception nécessite aussi des opérations de montage complexes car devant se faire dans un ordre prédéterminé selon plusieurs directions. De plus, le nombre de pièces est relativement important.

Par ailleurs, ce dispositif nécessite une très grande précision quant à la dimension du pion de retenue et quand au positionnement relatif du logement qui reçoit le doigt de blocage par rapport au corps du verrou rotatif. En effet, on peut voir que le déplacement du pion de retenue entre sa position de retenue et sa position inactive est très faible si bien que la moindre imprécision dans les dimensions des pièces peut résulter soit en un déclenchement intempestif des moyens de blocage du pêne, soit au contraire en une impossibilité de montage des moyens de commande du pêne.

L'invention a donc pour objet de proposer une nouvelle conception des moyens de blocage du pêne qui permettent à la fois de faciliter la fabrication et le montage de l'antivol et qui permettent notamment de prévoir des tolérances de dimensionnement plus grandes pour les pièces constitutives du dispositif.

Dans ce but, l'invention propose un antivol du type décrit précédemment, caractérisé en ce que les moyens pour bloquer le pêne sont constitués par une épingle élastique à deux branches qui, tant que les deux parties ne sont pas séparées, est maintenue par la deuxième partie dans un état contraint dans lequel les deux branches sont en appui chacune contre un élément de paroi, et en ce que, lorsque les deux parties sont séparées, l'épingle revient vers un état de moindre contrainte, dans lequel l'une des branches coopère avec le pêne pour en assurer le blocage.

Selon d'autres caractéristiques de l'invention :
- tant que les deux parties ne sont pas séparées, les deux branches sont en appui chacune contre une des parties de manière que l'épingle est maintenue dans un état contraint, et, lorsque les deux parties sont séparées, la branche qui était en appui contre la seconde partie de l'antivol coopère avec le pêne pour en assurer le blocage ;
- tant que les deux parties ne sont pas séparées, une première branche est en appui contre la première partie et une deuxième branche est en appui contre un pion de retenue qui est maintenu dans une position de retenue par la seconde partie de l'antivol et qui, après la séparation des deux parties, s'escamote pour permettre à la seconde branche de coopérer avec le pêne ;
- l'épingle élastique est reçue dans un logement de la première partie de l'antivol, tant que les deux parties ne sont pas séparées, l'épingle est maintenue par la deuxième partie dans un état contraint dans lequel les deux branches sont en appui chacune contre un élément de paroi de la première partie, et, lorsque les deux parties sont séparées, les deux branches coopèrent avec les éléments de paroi de telle sorte que, l'épingle revenant vers un état de moindre contrainte, l'épingle se déplace dans le logement vers une position dans laquelle l'une des branches coopère avec le pêne pour en assurer le blocage ;
- l'épingle est retenue dans son état contraint par un pion de retenue qui est maintenu dans sa position de retenue par coincement entre les deux parties de l'antivol tant qu'elles ne sont pas séparées, et lorsque les deux parties sont séparées, le pion de retenue s'escamote sous l'action de l'épingle qui se déplace dans le logement en revenant à son état de moindre contrainte ;
- l'épingle est reçue dans un logement qui est aménagé dans la première partie de l'antivol et qui s'étend dans un plan sensiblement perpendiculaire à la direction de coulissement du pêne ;
- l'épingle élastique est réalisée sous la forme d'un ressort hélicoïdal à action angulaire, d'axe sensiblement parallèle à la direction de coulissement du pêne et dont les deux extrémités s'étendent radialement vers l'extérieur pour former les deux branches de l'épingle ;
- les deux parties de l'antivol comportent un boîtier commun réalisé en une seule pièce dans lequel les deux parties sont délimitées l'une de l'autre par une ligne d'amorce de rupture ;
- l'épingle élastique est susceptible de bloquer le pêne dans l'une et l'autre de ses positions antivol et dégagée.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues schématiques en coupe selon un plan perpendiculaire à une colonne de direction de véhicule automobile illustrant l'immobilisation en rotation de la colonne par un dispositif d'antivol dont le pêne est représenté respectivement sur les figures 1 et 2 en position antivol et en position dégagée ;
- la figure 3 est vue en extérieur d'un premier mode de réalisation de l'invention ;
- les figures 4 et 5 sont des vues en coupe selon les lignes 4-4 et 5-5 de la figure 3 ;
- la figure 6 est une schématique et partielle, en perspective éclatée avec arrachement, illustrant plus particulièrement le montage de l'épingle élastique dans la première partie de l'antivol ;
- les figures 7 et 8 sont des vues similaires à celles des figures 4 et 5 illustrant l'antivol suite à une séparation de ses deux parties, entraînant la mise en action des moyens de blocage ; et
- les figures 9 et 10 sont des vues en coupe d'un second mode de réalisation de l'invention qui est illustré respectivement avant et après la séparation des deux parties de l'antivol ;
- les figures 11 et 12 sont des vues de détail agrandies des figures 8 et 9 illustrant plus particulièrement les moyens de blocage du pêne dans le second mode de réalisation de l'invention.

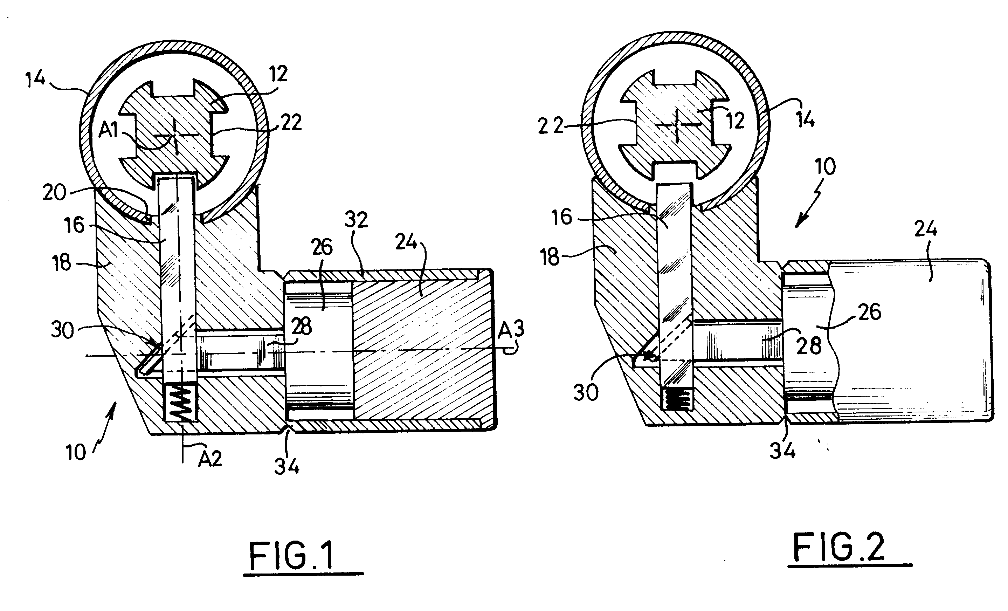

On a illustré sur la figure 1 un antivol 10 de véhicule automobile qui est destiné à immobiliser en rotation un arbre de colonne de direction 12. L'arbre de colonne 12 est monté à rotation autour de son axe A1 dans un tube de colonne 14, qui est fixe dans le véhicule, et sur lequel est fixé l'antivol 10.

L'antivol 10 comporte un pêne 16 qui s'étend longitudinalement selon une direction A2 qui est sensiblement perpendiculaire à l'axe A1 de la colonne 12. Le pêne 16 est monté à coulissement selon la direction A2 dans une première partie 18 de l'antivol qui est réalisée sous la forme d'un boîtier particulièrement rigide.

Le pêne 16 est destiné à être déplacé entre une position antivol avancée illustrée à la figure 1 et une position dégagée reculée illustrée à la figure 2. En position antivol, une extrémité avant du pêne 16 dépasse radialement en direction de l'axe A1 à l'intérieur du tube de colonne 14, au travers d'une ouverture 20 pour être reçue dans l'un d'une série de logements 22 complémentaires aménagés dans l'arbre 12 de la colonne de direction. Les logements 22 sont répartis angulairement de manière régulière autour de l'axe A1 de telle sorte que l'arbre 12 peut être immobilisé en de multiples positions angulaires lorsque le pêne 16 est engagé dans l'un des logements 22.

Au contraire, lorsque le pêne 16 est dégagé des logements 22, l'arbre 12 la colonne de direction est libre en rotation autour de son axe dans le tube 14.

De manière connue, l'antivol 10 comporte des moyens pour assurer la commande du pêne 16, ces moyens devant pouvoir par ailleurs permettre d'une part d'identifier un utilisateur autorisé et, d'autre part, de commander l'alimentation de différents circuits électriques du véhicule.

A cet effet, l'antivol 10 comporte par exemple un verrou rotatif 24 destiné à être commandé par une clef, et un commutateur rotatif 26 entraîné par un rotor du verrou. Lorsqu'une clef conforme est engagée dans le verrou 24, la rotation de celui-ci est autorisée, ce qui par exemple peut provoquer le coulissement d'une tirette 28 selon la direction de l'axe A3 du verrou 24 entre une position verrouillée illustrée à la figure 1 et une position déverrouillée à la figure 2. Le verrou 24 commande simultanément le commutateur rotatif 26.

La direction A3 de coulissement de la tirette 28 est perpendiculaire à celle A2 du pêne 16, et ces deux éléments sont liés l'un à l'autre par des éléments à rampe 30 qui permettent de convertir un mouvement de translation en un autre mouvement de translation de direction perpendiculaire. Toutefois, les moyens de commande du déplacement du pêne 16 peuvent être réalisés suivant d'autres manières, par exemple en utilisant une came à excentrique entraînée par le verrou 24.

Comme on peut le voir sur les figures, le verrou 24 et le commutateur 26 sont reçus dans une seconde partie 32 du boîtier de l'antivol qui s'étend sensiblement selon la direction de l'axe A3 depuis la première partie 18. Dans l'exemple de réalisation illustré sur les figures, le boîtier de l'antivol est réalisé en une seule pièce mais il est prévu une ligne d'amorce de rupture 34 qui permet aux deux parties 18, 32 de se séparer l'une de l'autre si un effort trop violent est appliqué sur la seconde partie 32 qui est bien entendu forcément accessible depuis l'habitacle du véhicule, afin que le conducteur puisse y introduire une clef.

Conformément aux enseignements de l'invention, l'antivol 10 est muni de moyens pour assurer le blocage du pêne 16 en cas de séparation des deux parties 18, 32 du boîtier de l'antivol 10.

Selon un aspect de l'invention, ce blocage du pêne 16 peut intervenir indifféremment lorsque le pêne est en position antivol ou en position dégagée. Il peut en effet être particulièrement avantageux d'immobiliser le pêne en position dégagée au cas où la rupture du boîtier d'antivol se produirait par exemple suite à un accident car il ne faudrait pas que le conducteur, pouvant éventuellement poursuivre sa route, voie la colonne de direction se bloquer en cours de route du fait d'un enclenchement intempestif du pêne consécutif à la dégradation de l'antivol.

Dans ce but, le pêne 16 comporte, dans une face latérale 36, deux cavités 38 dont l'une ou l'autre, en fonction de la position du pêne 16, débouche en regard d'un logement 40 qui est aménagé dans la première partie 18 et qui reçoit les moyens de blocage du pêne.

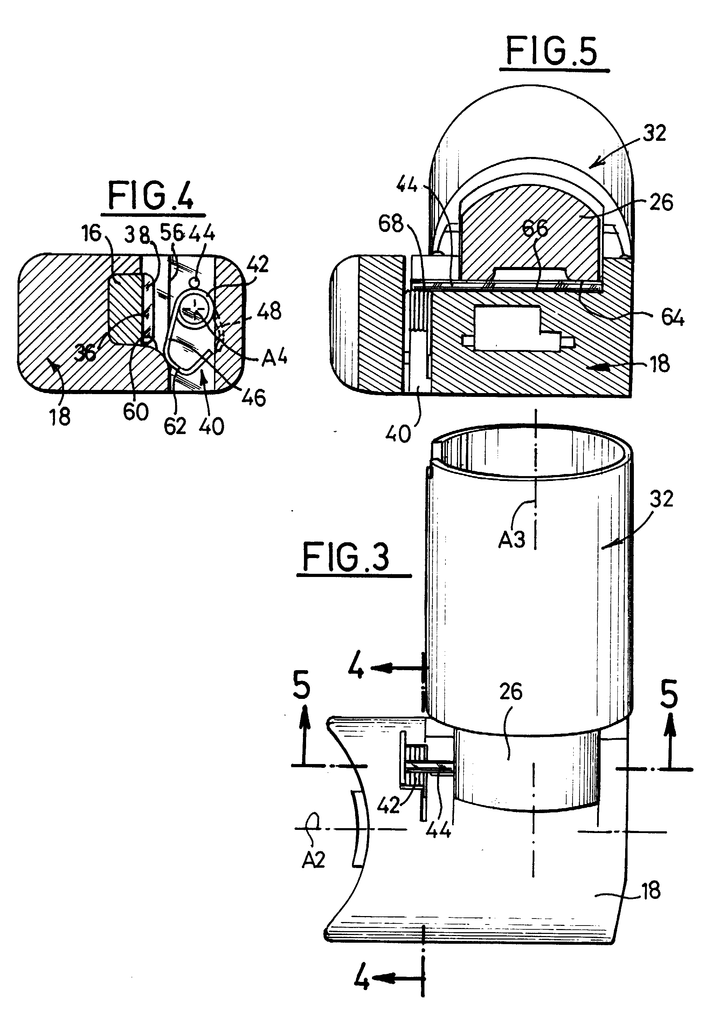

On a illustré sur les figures 3 à 8 un premier mode de réalisation de l'invention dans lequel les moyens de blocage comportent une épingle élastique 42 qui est retenue dans une position escamotée par un pion de retenue 44 tant que les deux parties 18, 32 de l'antivol restent solidaires l'une de l'autre.

L'épingle élastique 42 est réalisée sous la forme d'un ressort hélicoïdal à action angulaire d'axe A4 sensiblement parallèle à l'axe A2 de coulissement du pêne 16. Les deux extrémités de l'enroulement hélicoïdal 43 du ressort s'étendent radialement vers l'extérieur par rapport à l'axe A4 pour former les deux branches 46, 48 de l'épingle élastique 42.

Plus particulièrement, on peut voir que le logement 40 s'étend sensiblement selon un plan perpendiculaire à la direction A2 de coulissement du pêne 16 et qu'il est aménagé dans la première partie 18 du logement de manière à déboucher en regard de la face latérale 36 du pêne 16 dans laquelle sont formées les entailles 38.

Par convention, on appellera « transversale » la direction perpendiculaire à la direction longitudinale de l'axe A4 et perpendiculaire à la face 36 du pêne 16 dans laquelle sont formées les entailles 38. On appellera également « verticale » la direction perpendiculaire aux directions longitudinale et transversale.

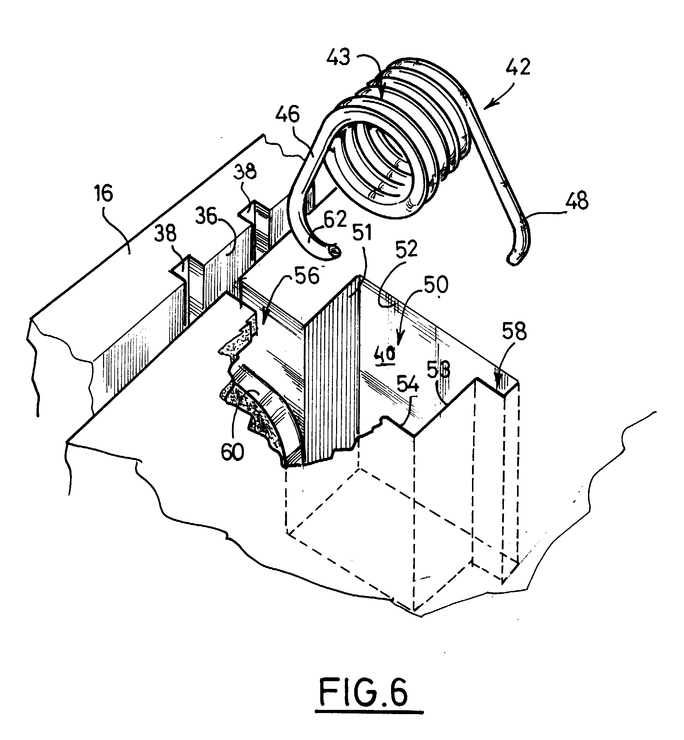

Comme on peut le voir plus particulièrement sur la figure 6, le logement 40 comporte une partie centrale 50 qui est délimitée selon la direction longitudinale de l'axe A4 par deux faces transversales avant 52 et arrière 54 qui sont espacées longitudinalement d'une dimension égale à la dimension correspondante de l'enroulement hélicoïdal 43 de l'épingle 42.

La partie centrale 50 du logement 40 est délimitée transversalement par deux parois longitudinales 51, 53, qui sont espacées l'une de l'autre d'une distance égale à la longueur de l'enroulement hélicoïdal 43 selon la direction longitudinale, et elle débouche verticalement vers le haut et vers le bas.

L'épingle 42 est donc parfaitement guidée dans le logement 40 selon les directions longitudinale et transversale, mais elle est susceptible de s'y déplacer selon la direction verticale.

Le logement 40 débouche en regard du pêne 16 par une première extension 56 qui s'étend transversalement dans le prolongement de la face transversale arrière 54 de la partie centrale 50, en direction du pêne 16. Une seconde extension 58 est agencée dans le prolongement de la face transversale avant 52, à l'opposé du pêne 16.

Les deux extensions 56, 58 présentent une dimension selon la direction longitudinale de l'axe A4 qui est sensiblement égale au diamètre du fil constituant l'épingle 42. De la sorte, les branches 46, 48 de l'épingle 42 sont destinées à être chacune reçue pratiquement sans jeu longitudinal dans l'extension 56, 58 correspondante.

Plus particulièrement, on peut voir que la première extension 56 qui débouche en regard du pêne 16 est délimitée axialement vers le bas par une surface en arc-de-cercle qui s'évase vers le haut. La première branche 46 qui est reçue dans cette première extension 56 présente une extrémité libre 62 qui est recourbée en forme de U vers la partie centrale 50 du logement 40, et qui est destinée à venir en appui contre la surface en arc de cercle 60.

Lorsque l'épingle 42 est engagée verticalement du haut vers le bas dans le logement 40, ses deux branches 46, 48 étant engagées respectivement dans l'extension 56, 58 correspondante, l'extrémité inférieure libre 62 arrive en contact avec la surface en arc de cercle 60 qui délimite verticalement vers le bas la première extension 56. Il est alors possible de forcer l'épingle 42 vers le bas de telle manière que l'extrémité libre 62 de la première branche 46 se trouve forcée transversalement vers l'intérieur de la partie centrale 50 du logement 40, rapprochant ainsi les deux branches 46, 48 de l'épingle 42 qui se trouve alors dans un état contraint représenté notamment à la figure 4.

Tant que les deux parties 18, 32 de l'antivol 10 ne sont pas séparées, l'épingle 42 est retenue dans cette position par le pion de retenue 44 qui s'étend selon la direction transversale et qui est maintenu par coincement entre une face inférieure 64 du commutateur 26 et une face supérieure 66 de la première partie 18 de l'antivol. Le pion de retenue 44, qui est réalisé sous la forme d'une tige allongée, présente ainsi une extrémité 68 qui s'étend transversalement en travers de la partie centrale du logement 50 et qui prend appui sur l'enroulement hélicoïdal 43 de l'épingle 42 pour maintenir celle-ci en appui vers le bas.

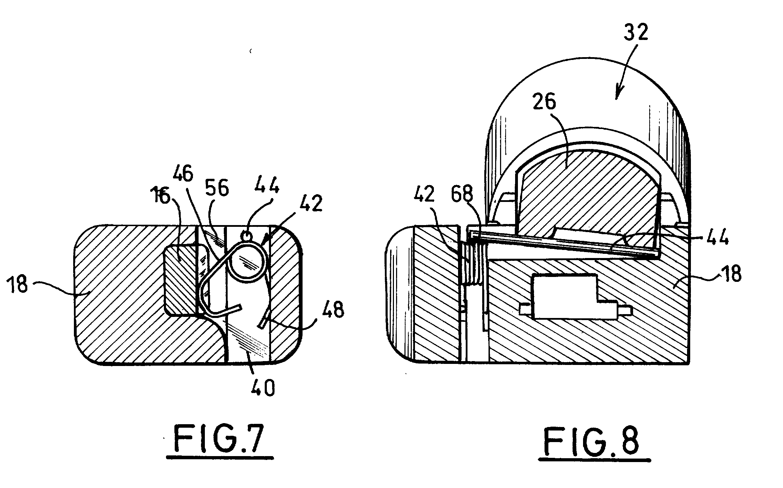

Comme on peut le voir sur les figures 7 et 8, lorsque les deux parties de l'antivol 10 sont séparées l'une de l'autre au moins partiellement, le commutateur 26 se déplace par rapport à la première partie 18 de l'antivol, ce qui libère le pion de retenue 44. Alors, on peut voir sur les figures 4 et 6 que, l'extrémité 62 de la première branche 46 étant en appui contre la surface arrondie 60, qui est tournée vers le haut, l'épingle 42, qui tend à revenir vers un état de moindre contrainte, tend à remonter dans le logement 40 en repoussant vers le haut l'extrémité 68 du pion 44 qui n'est plus maintenu coincé entre les deux parties 18, 32 de l'antivol.

En remontant, la première branche 46 de l'épingle 42 peut donc de nouveau pénétrer à l'intérieur de la première extension 56 et s'engager dans l'une des cavités 38 du pêne 16. Dans cette position, la première branche 46 est reçue quasiment sans jeu longitudinal à la fois dans la première extension 56 du logement 40 et dans l'entaille 38 du pêne 16 de telle sorte qu'elle assure l'immobilisation longitudinale du pêne 16.

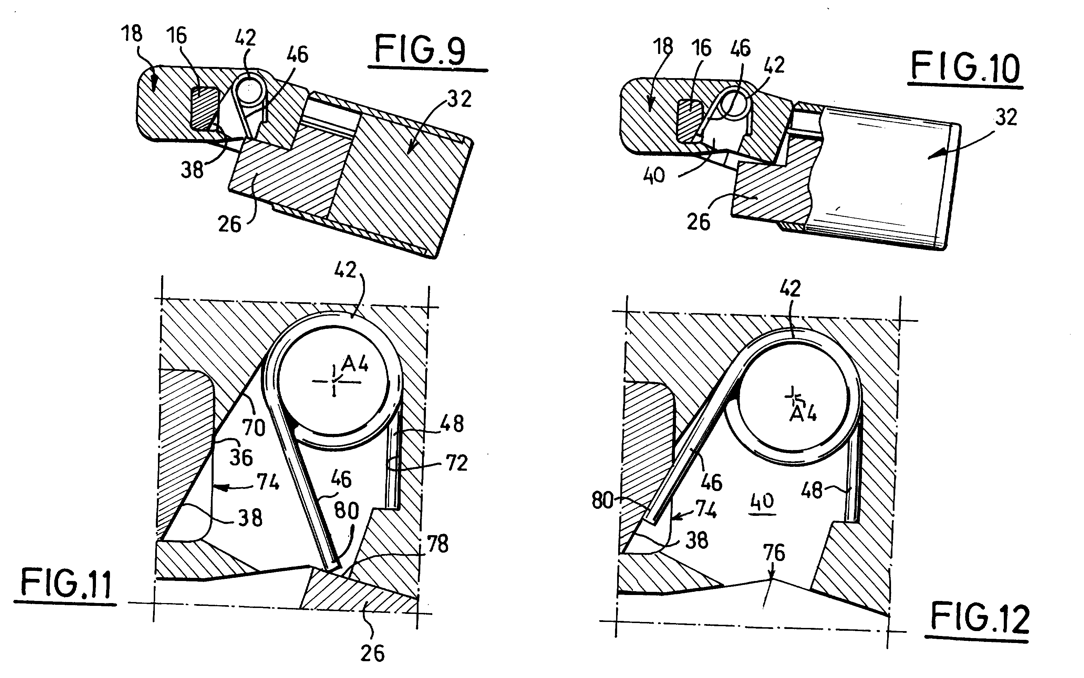

On a représenté sur les figures 9 à 12 un deuxième mode de réalisation de l'invention. Dans la description qui va suivre, des éléments identiques, similaires ou analogues à ceux décrits en référence au premier mode de réalisation sont désignés par les mêmes chiffres de référence.

Dans ce deuxième mode de réalisation, l'élément de blocage du pêne 16 est là aussi réalisé sous la forme d'une épingle élastique 42 à deux branches 46, 48 qui est reçue dans un logement 40.

L'épingle 42 est réalisée sous la forme d'un ressort hélicoïdal d'axe A4 à action angulaire, les deux branches 46, 48 étant réalisées par les deux extrémités de l'enroulement hélicoïdal 43 du ressort qui s'étendent radialement vers l'extérieur.

Le logement 40 est aménagé sensiblement selon un plan perpendiculaire à l'axe A2 de coulissement du pêne 16 dans lequel il présente sensiblement une forme de V à pointe arrondie, l'enroulement hélicoïdal 43 étant reçu au fond du V. L'un des côtés du V est formé par une paroi latérale 70 qui débouche dans une ouverture du logement 40 en regard de laquelle se trouve la face 36 du pêne 16 dans laquelle sont aménagées les entailles 38. L'autre côté du V est formé par une face latérale 72 du logement 40 contre laquelle vient en appui la seconde branche 48 de l'épingle 42. La forme en V du logement 40 permet donc aux deux branches 46, 48 de l'épingle 42 de posséder une certaine possibilité de débattement angulaire relatif autour de l'axe A4.

Comme on peut le voir plus particulièrement sur les figures 11 et 12, le logement 40 débouche par la première ouverture 74 en regard du pêne 16 et par une seconde ouverture 76 en regard d'une surface d'appui 78 portée par le commutateur 26 lié à la seconde partie 32 de l'antivol.

L'épingle 42 est engagée dans le logement 40 de telle manière que, lorsque les deux parties 18 et 32 de l'antivol ne sont pas séparées, les deux branches 46, 48 de l'épingle 42 sont rapprochées angulairement l'une de l'autre autour de l'axe A4 par déformation de l'épingle 42 qui se trouve alors dans un état contraint. En effet, comme on peut le voir sur les figures 9 et 11, l'extrémité libre 80 de la première branche 46 vient alors en appui, au travers de la seconde ouverture 76, contre la surface d'appui 78 portée par le commutateur 26.

Au contraire, lorsque les deux parties de l'antivol sont séparées ainsi que cela est représenté aux figures 10 et 12, l'extrémité libre 80 est libérée de l'appui sur le commutateur 26 et la première branche 46 tend à s'écarter de la seconde branche 48 du fait de l'élasticité de l'épingle qui était précédemment dans un état contraint. En se déplaçant vers un état de moindre contrainte de l'épingle 42, la seconde branche 48 pivote autour de l'axe A4 en direction du premier bord 70 du logement 40, son extrémité libre 80 étant alors amenée à s'engager au travers de la première ouverture 74 pour être reçue dans l'entaille 38 du pêne 16 afin d'en assurer l'immobilisation.

Ce deuxième mode de réalisation de l'invention est particulièrement avantageux du fait que les moyens de blocage du pêne 16 sont particulièrement simples puisque réalisés à l'aide d'une seule pièce, à savoir l'épingle 42.

Toutefois, on peut prévoir, en variante (non représentée), que la seconde branche 48 ne soit pas directement en appui sur la seconde partie 32 mais, par exemple, qu'elle soit retenue par un pion qui serait maintenu dans une position de retenue par les deux parties assemblées et qui s'escamoterait suite à la séparation des deux parties pour permettre à la seconde branche de venir coopérer avec le pêne 16, l'épingle 42 atteignant son état de moindre contrainte sans que son enroulement hélicoïdal 43 ne se déplace sensiblement dans le logement 40.

## Revendications

1. Antivol de colonne de direction, du type comportant une première partie (18) renfermant un pêne (16) qui, dans une position antivol, est destiné à immobiliser en rotation une colonne de direction, et seconde partie (32) renfermant un élément de commande du pêne (24, 26, 28) qui commande le pêne (16) entre sa position antivol et une position dégagée, et du type dans lequel il est prévu des moyens pour bloquer le pêne (16) lorsque les deux parties (18, 32) de l'antivol (10) sont séparées l'une de l'autre,
caractérisé en ce que les moyens pour bloquer le pêne (16) sont constitués par une épingle élastique (42) à deux branches (46, 48) qui, tant que les deux parties (18, 32) ne sont pas séparées, est maintenue par la deuxième partie (44, 78) dans un état contraint dans lequel les deux branches (46, 48) sont en appui chacune contre un élément de paroi (60, 58, 72, 78), et en ce que, lorsque les deux parties (18, 32) sont séparées, l'épingle (42) revient vers un état de moindre contrainte, dans lequel l'une des branches (48) coopère avec le pêne (16) pour en assurer le blocage.

2. Antivol selon la revendication 1, caractérisé en ce que, tant que les deux parties (18, 32) ne sont pas séparées, les deux branches (46, 48) sont en appui chacune contre une des parties de manière que l'épingle (42) est maintenue dans un état contraint, et en ce que, lorsque les deux parties (18, 32) sont séparées, la branche (48) qui était en appui contre la seconde partie (78, 26, 32) de l'antivol coopère avec le pêne (16) pour en assurer le blocage.

3. Antivol selon la revendication 1, caractérisé en ce que, tant que les deux parties (18, 32) ne sont pas séparées, une première branche est en appui contre la première partie et une deuxième branche est en appui contre un pion de retenue qui est maintenu dans une position de retenue par la seconde partie de l'antivol et qui, après la séparation des deux parties, s'escamote pour permettre à la seconde branche de coopérer avec le pêne.

4. Antivol selon la revendication 1, caractérisé en ce que l'épingle élastique (42) est reçue dans un logement (40) de la première partie (18) de l'antivol, en ce que, tant que les deux parties (18, 32) ne sont pas séparées, l'épingle (42) est maintenue par la deuxième partie (32) dans un état contraint dans lequel les deux branches (46, 48) sont en appui chacune contre un élément de paroi (60, 58) de la première partie (18), et en ce que, lorsque les deux parties (18, 32) sont séparées, les deux branches (46, 48) coopèrent avec les éléments de paroi (60) de telle sorte que, l'épingle (42) revenant vers un état de moindre contrainte, l'épingle (42) se déplace dans le logement (40) vers une position dans laquelle l'une (46) des branches coopère avec le pêne (16) pour en assurer le blocage.

5. Antivol selon la revendication 4, caractérisé en ce que l'épingle (42) est retenue dans son état contraint par un pion de retenue (44) qui est maintenu dans sa position de retenue par coincement entre les deux parties (18, 32) de l'antivol tant qu'elles ne sont pas séparées, et en ce que lorsque les deux parties (18, 32) sont séparées, le pion de retenue (44) s'escamote sous l'action de l'épingle (42) qui se déplace dans le logement (40) en revenant à son état de moindre contrainte.

6. Antivol selon l'une quelconque des revendications précédentes, caractérisé en ce que l'épingle (42) est reçue dans un logement (40) qui est aménagé dans la première partie (18) de l'antivol (10) et qui s'étend dans un plan sensiblement perpendiculaire à la direction de coulissement du pêne (16).

7. Antivol selon l'une quelconque des revendications précédentes, caractérisé en ce que l'épingle élastique (42) est réalisée sous la forme d'un ressort hélicoïdal à action angulaire, d'axe (A4) sensiblement parallèle à la direction de coulissement (A2) du pêne (16) et dont les deux extrémités s'étendent radialement vers l'extérieur pour former les deux branches (46, 48) de l'épingle (42).

8. Antivol selon l'une quelconque des revendications précédentes, caractérisé en ce que les deux parties (18, 32) de l'antivol (10) comportent un boîtier commun réalisé en une seule pièce dans lequel les deux parties sont délimitées l'une de l'autre par une ligne d'amorce de rupture (34).

9. Antivol selon l'une quelconque des revendications précédentes, caractérisé en ce que l'épingle élastique (42) est susceptible de bloquer le pêne (16) dans l'une et l'autre de ses positions antivol et dégagée.
